(19) Europäisches Patentamt / European Patent Office / Office européen des brevets

(11) **EP 4 645 498 A1**

(12) **EUROPEAN PATENT APPLICATION**
published in accordance with Art. 153(4) EPC

(43) Date of publication:
**05.11.2025  Bulletin 2025/45**

(21) Application number: **24894682.4**

(22) Date of filing: **22.11.2024**

(51) International Patent Classification (IPC):
$H01M\ 10/0525^{(2010.01)}$    $H01M\ 4/583^{(2010.01)}$
$H01M\ 4/48^{(2010.01)}$    $H01M\ 4/36^{(2006.01)}$
$H01M\ 4/525^{(2010.01)}$    $H01M\ 4/505^{(2010.01)}$

(52) Cooperative Patent Classification (CPC):
H01M 4/02; H01M 4/36; H01M 4/38; H01M 4/48;
H01M 4/505; H01M 4/525; H01M 4/58;
H01M 4/583; H01M 4/587; H01M 10/0525;
Y02E 60/10

(86) International application number:
**PCT/KR2024/018614**

(87) International publication number:
**WO 2025/110791 (30.05.2025 Gazette 2025/22)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority:  **23.11.2023  KR 20230164404**

(71) Applicant: **LG Energy Solution, Ltd.**
**Seoul 07335 (KR)**

(72) Inventor: **YUN, Hyunwoong**
**Daejeon 34122 (KR)**

(74) Representative: **Hoffmann Eitle**
**Patent- und Rechtsanwälte PartmbB**
**Arabellastraße 30**
**81925 München (DE)**

(54) **LITHIUM SECONDARY BATTERY**

(57)    The present application relates to a lithium secondary battery.

[Figure 1]

**EP 4 645 498 A1**

**Description**

[Technical Field]

This application claims priority to and the benefit of Korean Patent Application No. 10-2023-0164404 filed in the Korean Intellectual Property Office on November 23, 2023, the entire contents of which are incorporated herein by reference.
The present application relates to a lithium secondary battery.

[Background Art]

Due to the rapid increase in the use of fossil fuels, the demand for the use of alternative energy or clean energy is increasing, and as part thereof, the fields that are being studied most actively are the fields of power generation and power storage using an electrochemical reaction.
At present, a secondary battery is a representative example of an electrochemical device that uses such electrochemical energy, and the specified range of use thereof tends to be gradually expanding.
Along with the technology development and increased demand for mobile devices, the demand for secondary batteries as energy sources is increasing sharply. Among such secondary batteries, lithium secondary batteries having high energy density and voltage, long cycle life, and low self-discharging rate have been commercialized and widely used. In addition, research is being actively conducted on a method for manufacturing a high-density electrode having a higher energy density per unit volume as an electrode for such a high-capacity lithium secondary battery.
In general, a secondary battery includes a positive electrode, a negative electrode, an electrolyte, and a separator. The negative electrode includes a negative electrode active material for intercalating and deintercalating lithium ions coming out from the positive electrode, and silicon-based particles having a high discharge capacity may be used as the negative electrode active material.
In particular, in response to the demand for high-density energy batteries in recent years, researches are being actively conducted on a method for increasing a capacity by using a silicon-based compound such as Si/C or SiOx having a capacity 10-fold or higher than that of a graphite-based material, in combination as a negative electrode active material. When compared with graphite that is typically used, however, the silicon-based compound that is a high-capacity material is excellent in capacity characteristic itself, but undergoes rapid volume expansion during a charging process to disconnect a conductive path, resulting in deterioration in battery characteristics, and accordingly, the capacity decreases from the initial stage. In addition, for a silicon-based negative electrode, when the charging and discharging cycle is repeated, lithium ions are not uniformly charged in the depth direction of the negative electrode and reactions proceed on the surface, so that degradation in surface is accelerated, and therefore, the performance needs to be improved in terms of battery cycle.
Therefore, in order to solve the problem that occurs when a silicon-based compound is used as a negative electrode active material, a variety of methods are discussed, such as a method of controlling a drive potential, a method of additionally coating a thin film on an active material layer, a method of suppressing volume expansion itself such as a method of controlling a particle diameter of a silicon-based compound or a development of a binder capable of suppressing volume expansion of a silicon-based compound to prevent disconnection of a conductive path. In addition, research is being conducted to supplement the life characteristics of the silicon-based negative electrode by limiting a proportion of the silicon-based active material used during initial charging and discharging by a method of pre-lithiating the silicon-based active material layer, and imparting a reservoir role.
However, the above methods have limitations in their application because they may rather lower the performance of the battery, and thus there are still limitations in the commercialization of negative electrode batteries with a high content of silicon compounds.
In addition, recently, for batteries using NCM positive electrode materials, the NP Ratio is designed to be around 100 to 105. This design addresses the occurrence of Li plating on the negative electrode and the increased cost associated with excessive use of the negative electrode. Recently, designs are being developed to use a full profile of the negative electrode by ensuring that no residual negative electrode remains.
However, when the full profile of the negative electrode is used to ensure that no residual negative electrode remains, it causes problems with the life performance of the negative electrode, and in particular, the life degradation phenomenon occurs depending on the type of negative electrode active material, leading to further problems. That is, when a high-capacity silicon-based active material is used in a full profile to secure capacity characteristics, a problem occurs in which the life is reduced due to volume expansion.
Therefore, there is a need for research on how to improve cell performance without using the full profile of the negative electrode.

<Citation List>

(Patent Literature 1) Japanese Patent Application Publication No. 2009-080971

[Detailed Description of the Invention]

[Technical Problem]

The present application is based on the finding that, when the depth of discharge of the negative electrode is controlled (cut-off potential control) without using the full profile of the negative electrode, the cell characteristics can be improved along with the life characteristics.

Accordingly, the present application has been made in an effort to provide a lithium secondary battery in which the depth of discharge of the negative electrode is controlled.

[Technical Solution]

An exemplary embodiment of the present specification provides a lithium secondary battery including a positive electrode; a negative electrode; a separator interposed between the positive electrode and the negative electrode; and an electrolyte, in which the negative electrode has a discharge potential controlled to be 0 V or higher and 1.5 V or lower (vs Li/Li+), a residual negative electrode capacity of 2.5% or greater as defined by Formula 1, and a cut-off potential lower than the discharge potential.

[Formula 1]

$$\frac{\begin{pmatrix} \text{negative electrode discharge capacity (vs Li/Li+) within range of 0 V or higher and 1.5 V or lower} \\ - \text{negative electrode discharge capacity (vs Li/Li+) within range of 0V or higher and cut-off potential or lower} \end{pmatrix}}{\text{negative electrode discharge capacity (vs Li/Li+) within range of 0 V or higher and 1.5 V or lower}} \times 100 \, (\%)$$

[Advantageous Effects]

In the lithium secondary battery according to the present application, the full profile of the negative electrode is not used, and the discharge potential of the negative electrode is controlled to be 0 V or higher and 1.5 V or lower (vs Li/Li+), while the cut-off potential of the negative electrode is adjusted to be lower than the discharge potential of the negative electrode, thereby leaving the residual negative electrode capacity of the negative electrode as represented by Formula 1 above. That is, the main feature lies in improving the life characteristics by not using the full profile of the negative electrode and leaving the residual negative electrode capacity within the range of Formula 1 above.

That is, the main feature of the lithium secondary battery according to the present application lies in improving the life characteristics of the lithium secondary battery by adjusting the cut off voltage to leave a residual negative electrode capacity within the range of Formula 1, rather than adjusting the NP ratio to leave a residual negative electrode capacity.

[Brief Description of Drawings]

FIG. 1 is a view showing a stack structure of a lithium secondary battery according to an exemplary embodiment of the present application.

FIG. 2 is a diagram showing charge and discharge profiles, a cut-off potential, and a residual negative electrode capacity (%) of a carbon-based negative electrode.

FIG. 3 is a diagram showing charge and discharge profiles, a cut-off potential, and a residual negative electrode capacity (%) of a silicon-based negative electrode.

FIG. 4 is a diagram showing charge and discharge profiles, a cut-off potential, and a residual negative electrode capacity (%) of a carbon-based and silicon-based negative electrode.

FIGS. 5 to 9 are diagrams showing three-electrode data for confirming information about Examples and Comparative Examples of the present application.

[Best Mode]

Before describing the present invention, some terms are first defined.

When one part "includes", "comprises" or "has" one constituent element in the present specification, unless otherwise specifically described, this does not mean that another constituent element is excluded, but means that another constituent element may be further included.

In the present specification, 'p to q' means a range of 'p or more and q or less'.

In the present specification, the "specific surface area" is measured by the BET method, and specifically, is calculated from a nitrogen gas adsorption amount at a liquid nitrogen temperature (77K) by using BELSORP-mino II available from BEL Japan, Inc. That is, in the present application, the BET specific surface area may refer to the specific surface area measured by the above measurement method.

In the present specification, "Dn" refers to a particle diameter distribution, and refers to a particle diameter at the n% point in the cumulative distribution of the number of particles according to the particle diameter. That is, D50 is a particle diameter (average particle diameter, center particle diameter) at the 50% point in the cumulative distribution of the number of particles according to the particle diameter, D90 is a particle diameter at the 90% point in the cumulative distribution of the number of particles according to the particle diameter, and D10 is a particle diameter at the 10% point in the cumulative distribution of the number of particles according to the particle diameter. Note that the particle diameter distribution may be measured using a laser diffraction method. Specifically, after powder to be measured is dispersed in a dispersion medium, the resultant dispersion is introduced into a commercially available laser diffraction particle diameter measurement apparatus (for example, Microtrac S3500) in which a difference in a diffraction pattern according to the particle size is measured, when a laser beam passes through particles, and then a particle diameter distribution is calculated.

In the present specification, the description "a polymer includes a certain monomer as a monomer unit" means that the monomer participates in a polymerization reaction and is included as a repeating unit in the polymer. In the present specification, when a polymer includes a monomer, this is interpreted to be the same as when the polymer includes a monomer as a monomer unit.

In the present specification, it is understood that the term 'polymer' is used in a broad sense including a copolymer unless otherwise specified as 'a homopolymer'.

In the present specification, a weight-average molecular weight (Mw) and a number-average molecular weight (Mn) are polystyrene converted molecular weights measured by gel permeation chromatography (GPC) while employing, as a standard material, a monodispersed polystyrene polymer (standard sample) having various degrees of polymerization commercially available for measuring a molecular weight.

In the present specification, the molecular weight refers to a weight average molecular weight unless particularly described otherwise.

Hereinafter, exemplary embodiments of the present invention will be described in detail with reference to the drawings so that one skilled in the art can readily implement the present invention. However, the present invention may be implemented in various different forms, and is not limited to the following descriptions.

An exemplary embodiment of the present specification provides a lithium secondary battery including a positive electrode; a negative electrode; a separator interposed between the positive electrode and the negative electrode; and an electrolyte, in which the negative electrode has a discharge potential controlled to be 0 V or higher and 1.5 V or lower (vs Li/Li+), a residual negative electrode capacity of 2.5% or greater as defined by Formula 1, and a cut-off potential lower than the discharge potential.

[Formula 1]

$$\frac{\begin{array}{c}\text{(negative electrode discharge capacity (vs Li/Li+) within range of 0 V or higher and 1.5 V or lower}\\ -\text{ negative electrode discharge capacity (vs Li/Li+) within range of 0V or higher and cut-off potential or lower)}\end{array}}{\text{negative electrode discharge capacity (vs Li/Li+) within range of 0 V or higher and 1.5 V or lower}} \times 100 \ (\%)$$

In the lithium secondary battery according to the present application, the full profile of the negative electrode is not used, and the discharge potential of the negative electrode is controlled to be 0 V or higher and 1.5 V or lower (vs Li/Li+), while the cut-off potential of the negative electrode is adjusted to be lower than the discharge potential of the negative electrode, thereby leaving the residual negative electrode capacity of the negative electrode as represented by Formula 1 above. That is, the main feature lies in improving the life characteristics by not using the full profile of the negative electrode and leaving the residual negative electrode capacity within the range of Formula 1 above.

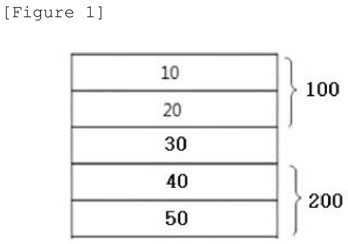

FIG. 1 is a view showing a stack structure of a lithium secondary battery according to an exemplary embodiment of the present application. Specifically, a negative electrode 100 for a lithium secondary battery including a negative electrode active material layer 20 on one surface of a negative electrode current collector layer 10 can be seen, a positive electrode 200 for a lithium secondary battery including a positive electrode active material layer 40 on one surface of a positive electrode current collector layer 50 can be seen, and the negative electrode 100 for a lithium secondary battery and the positive electrode 200 for a lithium secondary battery are formed in a stacked structure with a separator 30 interposed therebetween.

Below, the lithium secondary battery of the present invention will be described in more detail.

In the present application, the negative electrode includes a negative electrode current collector layer and a negative electrode active material layer including a negative electrode active material layer composition and provided on one surface or both surfaces of the negative electrode current collector layer.

In the present application, the negative electrode active material layer includes a negative electrode active material layer composition, and the negative electrode active material layer composition may include a negative electrode active material, a negative electrode conductive material, and a negative electrode binder.

In the present application, there is provided the lithium secondary battery in which the negative electrode active material includes at least one selected from the group consisting of a carbon-based active material, a silicon-based active material, a tin-based active material, a metal-based active material capable of alloying with lithium, a lithium titanium oxide, and a lithium-containing nitride.

In an exemplary embodiment of the present application, the carbon-based active material includes, as representative examples, natural graphite, artificial graphite, expanded graphite, carbon fiber, non-graphitizable carbon, graphitizable carbon, carbon black, carbon nanotube, fullerene, and activated carbon, can be used without limitation as long as it is commonly used as a carbon material for lithium secondary batteries, and specifically, can be processed into a spherical or point-like form for use.

In an exemplary embodiment of the present application, the silicon-based active material may include one or more selected from the group consisting of $SiO_x$ (x=0), $SiO_x$ (0 < x < 2), SiC, and a Si alloy.

In an exemplary embodiment of the present application, the silicon-based active material may include one or more selected from the group consisting of $SiO_x$ (0 < x < 2), SiC, and a Si alloy, and may include $SiO_x$ (0 < x < 2) in an amount of 1 part by weight or more based on 100 parts by weight of the silicon-based active material.

In another exemplary embodiment, the silicon-based active material may include one or more selected from the group consisting of $SiO_x$ (0 < x < 2), SiC, and a Si alloy, and may include $SiO_x$ (0 < x < 2) in an amount of 1 part by weight or more or 10 parts by weight or more, and 99 parts by weight or less based on 100 parts by weight of the silicon-based active material.

In another exemplary embodiment, the silicon-based active material may include $SiO_x$ (0 < x < 2).

In another exemplary embodiment, the silicon-based active material may be composed of $SiO_x$ (0 < x < 2).

In an exemplary embodiment of the present application, the negative electrode active material may be composed of a carbon-based active material.

In an exemplary embodiment of the present application, the negative electrode active material may be composed of a silicon-based active material.

In an exemplary embodiment of the present application, there is provided the lithium secondary battery in which the negative electrode active material includes a carbon-based active material and a silicon-based active material, and the silicon-based active material is included in an amount of 30 parts by weight or less based on 100 parts by weight of the negative electrode active material.

In particular, the silicon-based active material as described above exhibits a significant change in discharge capacity within a range of 0.2 V to 1.5 V. Thus, by controlling the depth of discharge of the negative electrode as in the present application, the effect of improving cell characteristics can be maximized.

In addition, even when the composition and content of the negative electrode active material are changed as described above, the life characteristics can be improved by controlling the cut-off potential of the negative electrode to leave a residual negative electrode capacity, which will be described below, and the type of negative electrode used is not limited.

In an exemplary embodiment of the present application, there is provided the lithium secondary battery in which the negative electrode active material is included in an amount of 60 parts by weight or more based on 100 parts by weight of the negative electrode active material layer composition.

In another exemplary embodiment, the negative electrode active material may be included in an amount of 60 parts by weight or more, 65 parts by weight or more, or 70 parts by weight or more, and 90 parts by weight or less or 85 parts by weight or less, based on 100 parts by weight of the negative electrode active material layer composition.

In an exemplary embodiment of the present application, the negative electrode active material layer composition may include a negative electrode conductive material and a negative electrode binder.

In the related art, it is general to use only graphite-based compounds as the negative electrode active material. However, in recent years, as the demand for high-capacity batteries is increasing, attempts to mix and use silicon-based active materials are increasing in order to increase capacity. However, in the case of a silicon-based active material, even when the characteristics of the silicon-based active material itself are adjusted as described above, the volume may rapidly expand during charging and discharging, thereby causing some problems of damaging the conductive path formed in the negative electrode active material layer.

Therefore, in an exemplary embodiment of the present application, the negative electrode conductive material may include one or more selected from the group consisting of a point-like conductive material, a planar conductive material, and a linear conductive material.

In an exemplary embodiment of the present application, the point-like conductive material refers to a point-like or spherical conductive material that may be used for improving conductivity of the negative electrode and has conductivity without causing a chemical change. Specifically, the point-like conductive material may be at least one selected from the group consisting of natural graphite, artificial graphite, carbon black, acetylene black, Ketjen black, channel black, furnace black, lamp black, thermal black, conductive fiber, fluorocarbon, aluminum powder, nickel powder, zinc oxide, potassium titanate, titanium oxide, and a polyphenylene derivative, and preferably may include carbon black in terms of high conductivity and excellent dispersibility.

In an exemplary embodiment of the present application, the point-like conductive material may have a BET specific surface area of 40 $m^2$/g or greater and 70 $m^2$/g or less, preferably 45 $m^2$/g or greater and 65 $m^2$/g or less, and more preferably 50 $m^2$/g or greater and 60 $m^2$/g or less.

In an exemplary embodiment of the present application, a content of the functional group (volatile matter) of the point-like conductive material may fall within a range of 0.01% or more and 1% or less, preferably 0.01% or more and 0.3% or less, and more preferably 0.01% or more and 0.1% or less.

In particular, when the content of the functional group of the point-like conductive material falls within the specified range, a functional group is present on a surface of the point-like conductive material, so that the point-like conductive material can be smoothly dispersed in a solvent when water is used as the solvent. In particular, in the present invention, as the specific silicon-based active material is used, a functional group content of the point-like conductive material can be lowered, which exhibits an excellent effect in improving dispersibility.

In an exemplary embodiment of the present application, the point-like conductive material having the content of the functional group within the range described above is included together with the silicon-based active material, and the content of the functional group can be adjusted according to a degree of heat treatment of the point-like conductive material.

In an exemplary embodiment of the present application, a particle diameter of the point-like conductive material may be 10 nm to 100 nm, preferably 20 nm to 90 nm, and more preferably 20 nm to 60 nm.

In an exemplary embodiment of the present application, the conductive material may include a planar conductive material.

The planar conductive material improves conductivity by increasing surface contact between silicon-based particles in the negative electrode, and at the same time, can serve to suppress disconnection of the conductive path due to the volume expansion. The planar conductive material may be expressed as a plate-like conductive material or a bulk-type conductive material.

In an exemplary embodiment of the present application, the planar conductive material may include at least one selected from the group consisting of plate-like graphite, graphene, graphene oxide, and graphite flake, and preferably may be plate-like graphite.

In an exemplary embodiment of the present application, an average particle diameter (D50) of the planar conductive material may be 2 to 7 $\mu$m, specifically 3 to 6 $\mu$m, and more specifically 3.5 to 5 $\mu$m. When the specified range is satisfied, the sufficient particle size results in easy dispersion without causing an excessive increase in viscosity of the negative electrode slurry. Therefore, the dispersion effect is excellent when performing dispersion using the same equipment and time.

In an exemplary embodiment of the present application, there is provided the negative electrode composition in which the planar conductive material has a D10 of 0.5 $\mu$m or greater and 2.0 $\mu$m or less, a D50 of 2.5 $\mu$m or greater and 3.5 $\mu$m or less, and a D90 of 6.5 $\mu$m or greater and 15.0 $\mu$m or less.

In an exemplary embodiment of the present application, for the planar conductive material, a planar conductive material with a high specific surface area having a high BET specific surface area or a planar conductive material with a low specific surface area may be used.

In an exemplary embodiment of the present application, for the planar conductive material, a planar conductive material with a high specific surface area or a planar conductive material with a low specific surface area may be used without limitation. However, in particular, the planar conductive material according to the present application can be affected to some extent in the electrode performance by the dispersion effect, so that a planar conductive material with a low specific surface area that does not cause a problem in dispersion is used particularly preferably.

In an exemplary embodiment of the present application, the planar conductive material may have a BET specific surface area of 0.25 $m^2$/g or greater.

In another exemplary embodiment, the planar conductive material may have a BET specific surface area of 1 $m^2$/g or greater and 500 $m^2$/g or less, preferably 5 $m^2$/g or greater and 300 $m^2$/g or less, and more preferably 5 $m^2$/g or greater and 250 $m^2$/g or less.

For the planar conductive material of the present application, a planar conductive material with a high specific surface area or a planar conductive material with a low specific surface area may be used.

In another exemplary embodiment, the planar conductive material is a planar conductive material with a high specific surface area, and the BET specific surface area may fall within a range of 50 $m^2/g$ or greater and 500 $m^2/g$ or less, preferably 80 $m^2/g$ or greater and 300 $m^2/g$ or less, and more preferably 100 $m^2/g$ or greater and 300 $m^2/g$ or less.

In another exemplary embodiment, the planar conductive material is a planar conductive material with a low specific surface area, and the BET specific surface area may fall within a range of 1 $m^2/g$ or greater and 40 $m^2/g$ or less, preferably 5 $m^2/g$ or greater and 30 $m^2/g$ or less, and more preferably 5 $m^2/g$ or greater and 25 $m^2/g$ or less.

Other conductive materials may include linear conductive materials such as carbon nanotubes. The carbon nanotubes may be bundle-type carbon nanotubes. The bundle-type carbon nanotubes may include a plurality of carbon nanotube units. Specifically, the term 'bundle type' herein refers to, unless otherwise specified, a bundle or rope-shaped secondary shape in which a plurality of carbon nanotube units are aligned side by side in such an orientation that longitudinal axes of the carbon nanotube units are substantially the same, or are entangled. The carbon nanotube unit has a graphite sheet having a cylindrical shape with a nano-sized diameter, and has an sp2 bonding structure. In this case, the characteristics of a conductive material or a semiconductive material may be exhibited depending on the rolled angle and structure of the graphite sheet. As compared with entangled-type carbon nanotubes, the bundle-type carbon nanotubes can be more uniformly dispersed during the manufacture of the negative electrode, and can form more smoothly a conductive network in the negative electrode to improve the conductivity of the negative electrode.

In an exemplary embodiment of the present application, the negative electrode conductive material may be included in an amount of 0.1 part by weight or more and 40 parts by weight or less based on 100 parts by weight of the negative electrode active material layer composition.

In another exemplary embodiment, the negative electrode conductive material may be included in an amount of 0.1 part by weight or more and 40 parts by weight or less, preferably 0.2 part by weight or more and 30 parts by weight or less, more preferably 0.4 part by weight or more and 25 parts by weight or less, and most preferably 0.4 part by weight or more and 10 parts by weight or less, based on 100 parts by weight of the negative electrode active material layer composition.

In an exemplary embodiment of the present application, there is provided the negative electrode composition in which the negative electrode conductive material includes a planar conductive material or a linear conductive material.

In an exemplary embodiment of the present application, the negative electrode conductive material may include a planar conductive material and a linear conductive material.

In the exemplary embodiment of the present application, the negative electrode conductive material may include 80 parts by weight or more and 99.9 parts by weight or less of the planar conductive material, and 0.1 part by weight or more and 20 parts by weight or less of the linear conductive material based on 100 parts by weight of the negative electrode conductive material.

In another exemplary embodiment, the negative electrode conductive material may include 80 parts by weight or more and 99.9 parts by weight or less, preferably 85 parts by weight or more and 99.9 parts by weight or less, and more preferably 95 parts by weight or more and 98 parts by weight or less of the planar conductive material based on 100 parts by weight of the negative electrode conductive material.

In another exemplary embodiment, the negative electrode conductive material may include 0.1 part by weight or more and 20 parts by weight or less, preferably 0.1 part by weight or more and 15 parts by weight or less, and more preferably 0.2 parts by weight or more and 5 parts by weight or less of the linear conductive material based on 100 parts by weight of the negative electrode conductive material.

In an exemplary embodiment of the present application, the negative electrode conductive material includes both the planar conductive material and the linear conductive material, each satisfying the composition and ratio described above, so the service life characteristics of a conventional lithium secondary battery are not significantly affected, and particularly, the inclusion of both the planar conductive material and the linear conductive material increases the number of points where charging and discharging are possible, leading to excellent output characteristics at a high C-rate and a reduction in gas generation at high temperatures.

In an exemplary embodiment of the present application, the negative electrode conductive material may be composed of a linear conductive material.

In particular, when a linear conductive material is used alone, the electrode tortuosity, which is a problem of silicon-based negative electrodes, can be simplified, making it possible to improve the electrode structure, and accordingly, to reduce the migration resistance of lithium ions in the electrode.

In an exemplary embodiment of the present application, when the negative electrode conductive material includes a linear conductive material alone, the negative electrode conductive material may be included in an amount of 0.1 part by weight or more and 5 parts by weight or less, preferably 0.2 part by weight or more and 3 parts by weight or less, and more preferably 0.4 part by weight or more and 1 part by weight or less based on 100 parts by weight of the negative electrode active material layer composition.

The negative electrode conductive material according to the present application has a completely different configuration from that of a positive electrode conductive material that is applied to the positive electrode. That is, the negative electrode conductive material according to the present application serves to hold the contact between silicon-based active materials whose volume expansion of the electrode is very large due to charging and discharging, and the positive electrode conductive material serves to impart some conductivity while serving as a buffer when roll-pressed, and is completely different from the negative electrode conductive material of the present invention in terms of configuration and role.

In addition, the negative electrode conductive material according to the present application is applied to a silicon-based active material, and has a completely different configuration from that of a conductive material that is applied to a graphite-based active material. That is, since a conductive material that is used for an electrode having a graphite-based active material simply has smaller particles than the active material, the conductive material has characteristics of improving output characteristics and imparting some conductivity, and is completely different from the negative electrode conductive material that is applied together with the silicon-based active material as in the present invention, in terms of configuration and role.

In an exemplary embodiment of the present application, the planar conductive material that is used as the negative electrode conductive material described above has a different structure and role from those of the carbon-based active material that is generally used as the negative electrode active material. Specifically, the carbon-based active material that is used as the negative electrode active material may be artificial graphite or natural graphite, and refers to a material that is processed into a spherical or point-like shape and used so as to facilitate storage and release of lithium ions.

On the other hand, the planar conductive material that is used as the negative electrode conductive material is a material having a planar or plate-like shape, and may be expressed as plate-like graphite. That is, the planar conductive material is a material that is included in order to maintain a conductive path in the negative electrode active material layer, and refers to a material for securing a conductive path in a planar shape inside the negative electrode active material layer, rather than playing a role in storing and releasing lithium.

That is, in the present application, the use of plate-like graphite as a conductive material means that graphite is processed into a planar or plate-like shape and used as a material for securing a conductive path rather than playing a role in storing or releasing lithium. In this case, the negative electrode active material included together has high-capacity characteristics with respect to storing and releasing lithium, and serves to store and release all lithium ions transferred from the positive electrode.

On the other hand, in the present application, the use of a carbon-based active material as an active material means that the carbon-based active material is processed into a point-like or spherical shape and used as a material for storing or releasing lithium.

That is, in an exemplary embodiment of the present application, artificial graphite or natural graphite, which is a carbon-based active material, has a point-like shape, and a BET specific surface area thereof may fall within a range of 0.1 $m^2/g$ or greater and 4.5 $m^2/g$ or less. In addition, plate-like graphite, which is a planar conductive material, has a planar shape, and a BET specific surface area thereof may be 5 $m^2/g$ or greater.

In an exemplary embodiment of the present application, the negative electrode binder may include at least one selected from the group consisting of polyvinylidenefluoride-hexafluoropropylene copolymer (PVDF-co-HFP), polyvinylidenefluoride, polyacrylonitrile, polymethylmethacrylate, polyvinyl alcohol, carboxymethylcellulose (CMC), starch, hydroxypropylcellulose, regenerated cellulose, polyvinylpyrrolidone, tetrafluoroethylene, polyethylene, polypropylene, polyacrylic acid, ethylene-propylene-diene monomer (EPDM), sulfonated EPDM, styrene butadiene rubber (SBR), fluoro rubber, poly acrylic acid, and the above-described materials in which a hydrogen is substituted with Li, Na, Ca, etc., and may also include various copolymers thereof.

The negative electrode binder according to an exemplary embodiment of the present application serves to hold the active material and the conductive material in order to prevent distortion and structural deformation of the negative electrode structure during volume expansion and relaxation of the silicon-based active material. When such roles are satisfied, all of the general binders can be applied. Specifically, an aqueous binder may be used, and more specifically, a PAM-based binder may be used.

In the exemplary embodiment of the present application, the negative electrode binder may be included in an amount of 30 parts by weight or less, preferably 25 parts by weight or less, more preferably 20 parts or less, and 5 parts by weight or more, and 10 parts by weight or more, on the basis of 100 parts by weight of the negative electrode active material layer composition.

In an exemplary embodiment of the present application, there is provided the lithium secondary battery in which a thickness of the negative electrode current collector layer is 1 $\mu$m or greater and 100 $\mu$m or less, and a thickness of the negative electrode active material layer is 5 $\mu$m or greater and 500 $\mu$m or less.

The negative electrode current collector layer generally has a thickness of 1 $\mu$m to 100 $\mu$m. Such a negative electrode current collector layer is not particularly limited as long as it has high conductivity without causing a chemical change in the battery. For example, copper, stainless steel, aluminum, nickel, titanium, fired carbon, copper or stainless steel each surface-treated with carbon, nickel, titanium, silver, or the like, an aluminum-cadmium alloy, or the like may be used. In addition, the negative electrode current collector layer may have microscopic irregularities formed on a surface to enhance a bonding force of the negative electrode active material, and may be used in various forms such as a film, a sheet, a foil, a net, a porous body, a foamed body, or a non-woven fabric body.

However, the thickness may be variously modified depending on a type and a use of negative electrode used, and is not limited thereto.

In an exemplary embodiment of the present application, a porosity of the negative electrode active material layer may fall within a range of 10% or greater and 60% or less.

In another exemplary embodiment, the porosity of the negative electrode active material layer may fall within a range of 10% or greater and 60% or less, preferably 20% or greater and 50% or less, and more preferably 30% or greater and 45% or less.

The porosity varies depending on the compositions and contents of the active material, conductive material, and binder included in the negative electrode active material layer, such that the electrode has electrical conductivity and resistance within appropriate ranges.

In an exemplary embodiment of the present application, the positive electrode includes a positive electrode current collector layer and a positive electrode active material layer including a positive electrode active material layer composition and provided on one surface or both surfaces of the positive electrode current collector layer, and the positive electrode active material layer composition includes a positive electrode active material.

In the positive electrode, the positive electrode current collector layer is not particularly limited as long as it has conductivity without causing a chemical change in the battery. For example, stainless steel, aluminum, nickel, titanium, fired carbon, aluminum or stainless steel each surface-treated with carbon, nickel, titanium, silver, or the like, or the like may be used. In addition, the positive electrode current collector layer may typically have a thickness of 3 to 500 $\mu$m, and a surface of the current collector may be formed with microscopic irregularities to enhance adhesive force of the positive electrode active material. For example, the positive electrode current collector may be used in various forms such as a film, a sheet, a foil, a net, a porous body, a foamed body, and a non-woven fabric body.

The positive electrode active material may be a positive electrode active material that is typically used. Specifically, the positive electrode active material may be a layered compound such as a lithium cobalt oxide ($LiCoO_2$) and a lithium nickel oxide ($LiNiO_2$), or a compound substituted with one or more transition metals; a lithium iron oxide such as $LiFe_3O_4$; a lithium manganese oxide such as chemical formula $Li_{1+c1}Mn_{2-c1}O_4$ ($0 \leq c1 \leq 0.33$), $LiMnO_3$, $LiMn_2O_3$ and $LiMnO_2$; a lithium copper oxide ($Li_2CuO_2$); a vanadium oxide such as $LiV_3O_8$, $V_2O_5$ and $Cu_2V_2O_7$; a Ni-site type lithium nickel oxide represented by chemical formula $LiNi_{1-c2}M_{c2}O_2$ (where M is at least one selected from the group consisting of Co, Mn, Al, Cu, Fe, Mg, B, and Ga, and satisfies $0.01 \leq c2 \leq 0.3$); a lithium manganese composite oxide represented by chemical formula $LiMn_{2-c3}M_{c3}O_2$ (where M is at least one selected from the group consisting of Co, Ni, Fe, Cr, Zn and Ta, and satisfies $0.01 \leq c3 \leq 0.1$) or $Li_2Mn_3MO_8$ (where M is at least one selected from the group consisting of Fe, Co, Ni, Cu and Zn); $LiMn_2O_4$ in which a part of Li of the chemical formula is substituted with an alkaline earth metal ion, or the like, but is not limited thereto. The positive electrode may be Li metal.

In the present application, there is provided the lithium secondary battery in which the positive electrode active material includes one or more selected from the group consisting of $LiNi_xCo_yMn_zO_2$ ($x+y+z=1$); $LiNi_aCo_bMn_cAl_eO_2$ ($a+b+c+d=1$); $LiMn_2O_4$; $LiNi_{0.3}Mn_{1.3}O_2$; and $LiM_xFe_yPO_4$ (M: transition metal, $x+y=1$).

In this case, the positive electrode conductive material is used to impart conductivity to the electrode, and can be used without particular limitation as long as the positive electrode conductive material has electronic conductivity without causing a chemical change in a battery to be constituted. Specific examples may include graphite such as natural graphite and artificial graphite; a carbon-based material such as carbon black, acetylene black, Ketjen black, channel black, furnace black, lamp black, thermal black and carbon fiber; metal powders or metal fibers such as copper, nickel, aluminum and silver; a conductive whisker such as zinc oxide and potassium titanate; a conductive metal oxide such as titanium oxide; or a conductive polymer such as polyphenylene derivative, or the like, and any one thereof or a mixture of two or more thereof may be used.

In addition, the positive electrode binder serves to improve bonding between particles of the positive electrode active material and adhesive force between the positive electrode active material and the positive electrode current collector. Specific examples may include polyvinylidene fluoride (PVDF), vinylidene fluoride-hexafluoropropylene copolymer (PVDF-co-HFP), polyvinyl alcohol, polyacrylonitrile, carboxymethylcellulose (CMC), starch, hydroxypropylcellulose, regenerated cellulose, polyvinylpyrrolidone, tetrafluoroethylene, polyethylene, polypropylene, ethylene-propylene-diene polymer (EPDM), sulfonated-EPDM, styrene butadiene rubber (SBR), fluoro rubber, or various copolymers thereof, and the like, and any one thereof or a mixture of two or more thereof may be used.

The present application provides a lithium secondary battery including a positive electrode, a negative electrode, a separator interposed between the positive electrode and the negative electrode, and an electrolyte, in which the negative electrode has a discharge potential controlled to be 0 V or higher and 1.5 V or lower (vs Li/Li+).

Generally, negative electrodes undergo charging and discharging within a range of 0.005 V to 1.5 V, depending on the composition and content of an active material used. However, in the case of materials such as Si or Sn, charging and discharging are conducted within a range of 0.005 V to 3 V, and a 3 V cut-off profile may also be used. In this case, however, the profile meets the discharge potential of the profile of the positive electrode, which is a counter electrode of a full cell, causing the voltage to approach 0 V, thereby falling outside the actual operating voltage range of the lithium secondary battery. Regarding this, the negative electrode for a lithium secondary battery according to the present application has a feature in which the discharge potential is controlled to be 0 V or higher and 1.5V or lower (vs Li/Li+), regardless of the composition and content of the active material used.

In this case, the negative electrode according to the present application may have a residual negative electrode capacity represented by Formula 1 above.

Having a residual negative electrode capacity represented by Formula 1 may indicate that the negative electrode discharge capacity (vs Li/Li+) within the range of 0 V or higher and 1.5 V or lower and the negative electrode discharge capacity up to the cut-off potential are not the same, and specifically, if Formula 1 has a value of 2.5% or greater, the negative electrode can be applied without limitation.

In the present application, there is provided the lithium secondary battery in which the residual negative electrode capacity of the negative electrode represented by Formula 1 above is 2.5% or greater and 50% or less.

In the present application, the residual negative electrode capacity represented by Formula 1 above may be 2.5% or greater, specifically 5% or greater, and more specifically 10% or greater, and 80% or less, specifically 60% or less, and more specifically 50% or less.

In the present application, the value of (negative electrode discharge capacity (vs Li/Li+) within a range of 0 V or higher and 1.5 V or lower - negative electrode discharge capacity (vs Li/Li+) within a range of 0 V or higher and cut-off potential or lower) of Formula 1 may be 1 $\mu$Ah/cm$^2$ or greater, and the cut-off potential of the negative electrode may be 0 V or higher and 1.4 V or lower.

In the present application, the value of (negative electrode discharge capacity (vs Li/Li+) within a range of 0 V or higher and 1.5 V or lower - negative electrode discharge capacity (vs Li/Li+) within a range of 0 V or higher and cut-off potential or lower) of Formula 1 may fall within a range of 1 $\mu$Ah/cm$^2$ or greater and 20 mAh/cm$^2$ or less, specifically 10 $\mu$Ah/cm$^2$ or greater and 15 mAh/cm$^2$ or less, and more specifically 100 $\mu$Ah/cm$^2$ or greater and 10 mAh/cm$^2$ or less.

By leaving the residual negative electrode capacity within the specified range, the life characteristics can be improved, as compared to using the full profile of the negative electrode.

In an exemplary embodiment of the present application, the cut-off potential of the negative electrode may be lower than the discharge potential of the negative electrode.

In this case, the cut-off potential of the negative electrode may be 0 V or higher and 1.4 V or lower. In the present application, the degree of the residual negative electrode capacity represented by Formula 1 above may be determined according to the cut-off potential of the negative electrode.

In an exemplary embodiment of the present application, there is provided the lithium secondary battery in which the negative electrode active material includes a carbon-based active material, and the cut-off potential of the negative electrode is 0.1 V or higher and 0.9 V or lower.

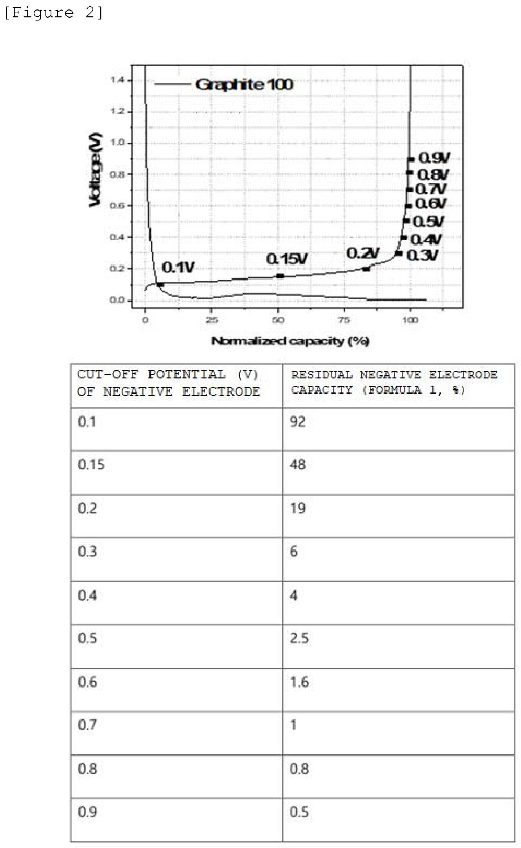

Specifically, FIG. 2 illustrates a negative electrode having 100% carbon-based active material, and when a cut-off potential lower than 0.5 V is set, the negative electrode can have the residual negative electrode capacity of Formula 1.

In an exemplary embodiment of the present application, there is provided the lithium secondary battery in which the negative electrode active material includes a silicon-based active material, and the cut-off potential of the negative electrode is 0.1 V or higher and 1.4 V or lower.

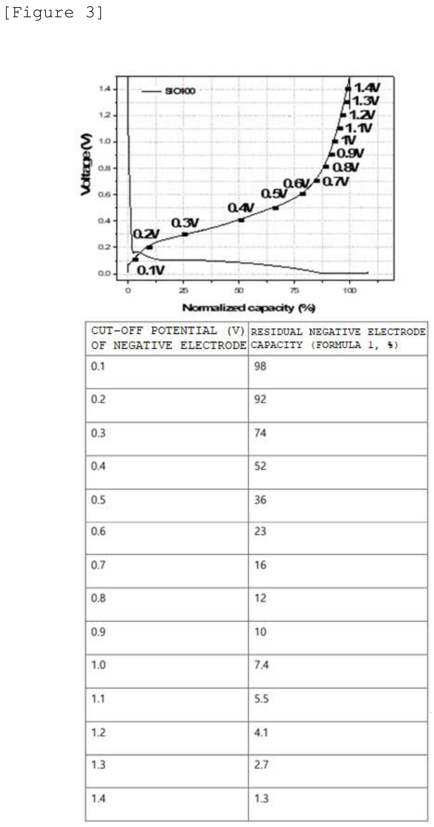

Specifically, FIG. 3 illustrates a negative electrode having 100% silicon-based active material, and when a cut-off potential lower than 1.3 V is set, the negative electrode can have the residual negative electrode capacity of Formula 1.

In an exemplary embodiment of the present application, there is provided the lithium secondary battery in which the negative electrode active material includes a silicon-based active material and a carbon-based active material, and the cut-off potential of the negative electrode is 0.2 V or higher and 1.3 V or lower.

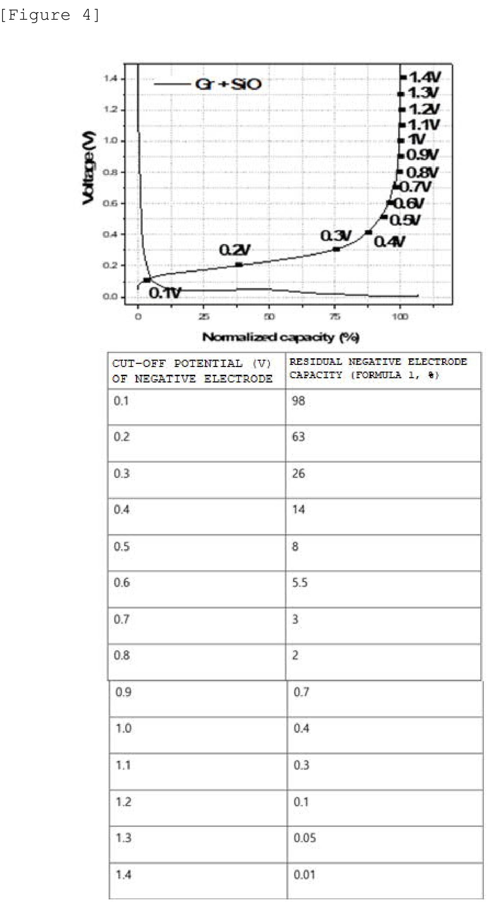

Specifically, FIG. 4 illustrates a negative electrode having a mixture of a silicon-based active material and a carbon-based active material, and when a cut-off potential lower than 0.7 V is set, the negative electrode can have the residual negative electrode capacity of Formula 1.

That is, FIGS. 2 to 4 are diagrams showing the charge and discharge profiles of the negative electrode according to the type of negative electrode. Specifically, the capacity value of the x-axis changes depending on the type of negative electrode, and the residual negative electrode capacity can be compared according to the cut-off potential of the negative electrode. Specifically, for the carbon-based negative electrode, there is almost no difference in capacity between 1.5 V and 1.4 V to 1.45 V, so that no residual capacity remains. Accordingly, for the carbon-based negative electrode, the cut-off potential can be adjusted to be 0.1 V or higher and 0.9 V or lower to leave the residual negative electrode capacity within the range of Formula 1. In addition, for the silicon-based negative electrode, the capacity change occurs near 1.5 V, and the capacity difference appears around 1.3 V. Therefore, for the silicon-based negative electrode, the cut-off potential can be adjusted to be 0.1 V or higher and 1.4 V or lower to leave the residual negative electrode capacity within the range of Formula 1.

For reference, a method for measuring profile curves of the negative electrode and the positive electrode in FIGS. 2 to 4 can be carried out by fabricating a coin cell, in which a negative electrode or positive to be measured is used as a working electrode, lithium metal is used as a counter electrode, a separator is placed therebetween, and an inside of the coin cell is filled with an electrolyte solution, and performing charging and discharging.

That is, the cut-off potential can be adjusted according to the type of negative electrode used as described above, and accordingly, the residual negative electrode capacity can be adjusted to be within the range of Formula 1, thereby improving the life characteristics together with the capacity characteristics, which is the main feature of the present invention.

The separator serves to separate the negative electrode and the positive electrode and to provide a movement path of lithium ions, in which any separator may be used as the separator without particular limitation as long as it is typically used in a secondary battery, and particularly, a separator having high moisture-retention ability for an electrolyte as well as a low resistance to the movement of electrolyte ions may be preferably used. Specifically, a porous polymer film, for example, a porous polymer film manufactured from a polyolefin-based polymer, such as an ethylene homopolymer, a propylene homopolymer, an ethylene/butene copolymer, an ethylene/hexene copolymer, and an ethylene/methacrylate copolymer, or a stacked structure having two or more layers thereof may be used. In addition, a usual porous non-woven fabric, for example, a non-woven fabric made of high melting point glass fibers, polyethylene terephthalate fibers, or the like may be used. Furthermore, a coated separator including a ceramic component or polymer material may be used so as to secure heat resistance or mechanical strength, and a separator having a single layer or multilayer structure may be selectively used.

Examples of the electrolyte may include an organic liquid electrolyte, an inorganic liquid electrolyte, a solid polymer electrolyte, a gel-type polymer electrolyte, a solid inorganic electrolyte, or a molten-type inorganic electrolyte that may be used in the manufacturing of the lithium secondary battery, but are not limited thereto.

Specifically, the electrolyte may include a non-aqueous organic solvent and a metal salt.

As the non-aqueous organic solvent, for example, an aprotic organic solvent such as N-methyl-2-pyrrolidinone, propylene carbonate, ethylene carbonate, butylene carbonate, dimethyl carbonate, diethyl carbonate, gamma-butyrolactone, 1,2-dimetoxy ethane, tetrahydrofuran, 2-methyltetrahydrofuran, dimethyl sulfoxide, 1,3-dioxolane, formamide, dimethylformamide, dioxolane, acetonitrile, nitromethane, methyl formate, methyl acetate, phosphoric acid triester, trimethoxy methane, dioxolane derivative, sulfolane, methyl sulfolane, 1,3-dimethyl-2-imidazolidinone, propylene carbonate derivative, tetrahydrofuran derivative, ether, methyl propionate, or ethyl propionate may be used.

In particular, among the carbonate-based organic solvents, ethylene carbonate and propylene carbonate, which are cyclic carbonates, are high-viscosity organic solvents and can be preferably used because they have high permittivity to dissociate a lithium salt well. When the cyclic carbonate is mixed with a linear carbonate with low viscosity and low permittivity, such as dimethyl carbonate and diethyl carbonate, in a suitable ratio and used, an electrolyte having high electric conductivity may be prepared, and therefore, may be more preferably used.

A lithium salt may be used as the metal salt, and the lithium salt is a material that is readily soluble in the non-aqueous electrolyte, in which, for example, one or more species selected from the group consisting of $F^-$, $Cl^-$, $I^-$, $NO_3^-$, $N(CN)_2^-$, $BF_4^-$, $ClO_4^-$, $PF_6^-$, $(CF_3)_2PF_4^-$, $(CF_3)_3PF_3^-$, $(CF_3)_4PF_2^-$, $(CF_3)_5PF^-$, $(CF_3)_6P^-$, $CF_3SO_3^-$, $CF_3CF_2SO_3^-$, $(CF_3SO_2)_2N^-$, $(FSO_2)_2N^-$, $CF_3CF_2(CF_3)_2CO^-$, $(CF_3SO_2)_2CH^-$, $(SF_5)_3C^-$, $(CF_3SO_2)_3C^-$, $CF_3(CF_2)_7SO_3^-$, $CF_3CO_2^-$, $CH_3CO_2^-$, $SCN^-$ and $(CF_3CF_2SO_2)_2N^-$ may be used as an anion of the lithium salt.

One or more additives, for example, a haloalkylene carbonate-based compound such as difluoroethylene carbonate, pyridine, triethylphosphite, triethanolamine, cyclic ether, ethylenediamine, n-glyme, hexaphosphoric triamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol, or aluminum trichloride, may be further included in the electrolyte for the purpose of improving service life characteristics of the battery, suppressing a decrease in battery capacity, improving discharge capacity of the battery, and the like, in addition to the above-described electrolyte components.

An exemplary embodiment of the present invention provides a battery module including the secondary battery as a unit cell, and a battery pack including the same. Since the battery module and the battery pack include the secondary battery having high capacity, high-rate capability, and high cycle characteristics, the battery module and the battery pack may be used as a power source of a medium to large sized device selected from the group consisting of an electric vehicle, a hybrid electric vehicle, a plug-in hybrid electric vehicle, and a power storage system.

Hereinafter, preferred examples will be provided for better understanding of the present invention. It will be apparent to one skilled in the art that the examples are only provided to illustrate the present invention and various modifications and alterations are possible within the scope and technical spirit of the present invention. Such modifications and alterations naturally fall within the scope of the claims included herein.

Mode for Invention

**<Preparation Examples>**

**<Example 1>**

**<Preparation of Secondary Battery>**

A negative electrode slurry (solid concentration 50 wt%) was prepared by adding a carbon-based active material (artificial graphite (D50: 18 $\mu$m): natural graphite (D50: 18 $\mu$m) = 50:50), carbon black, SBR as a binder, and CMC as a thickener to distilled water as a solvent for forming a negative electrode slurry at a weight ratio of 95.7:1:2.3:1.

As a mixing method, the carbon black, binder, and distilled water were dispersed at 2500 rpm for 30 minutes using a homo mixer, the active material was added to the dispersion, and the resulting mixture was dispersed at 2500 rpm for 30 minutes to prepare a negative electrode slurry.

The negative electrode slurry was coated on both surfaces of a copper current collector (thickness: 15 $\mu$m) serving as a negative electrode current collector, which was then dried in a vacuum oven at 130°C for 1 hour and roll-pressed to form a negative electrode active material layer (porosity 35%).

A positive electrode slurry (solid concentration: 63 wt%) was prepared by adding $LiNi_{0.6}Co_{0.2}Mn_{0.2}O_2$ (average particle diameter (D50): 15 $\mu$m) as a positive electrode active material, carbon black (product name: Super C65, manufacturer: Timcal) as a conductive material, and polyvinylidene fluoride (PVdF) as a binder to N-methyl-2-pyrrolidone (NMP) as a solvent for forming a positive electrode slurry at a weight ratio of 95:2.5:2.5.

The positive electrode slurry was coated on both surfaces of an aluminum current collector (thickness: 12 $\mu$m) serving as a positive electrode current collector, which was then dried in a vacuum oven at 130°C for 1 hour and roll-pressed to prepare a positive electrode active material layer (porosity 30%).

A lithium secondary battery was prepared by interposing a polyethylene separator between the positive electrode and the negative electrode and injecting an electrolyte.

The electrolyte was obtained by adding vinylene carbonate to an organic solvent, in which fluoroethylene carbonate (FEC) and diethyl carbonate (DEC) were mixed at a volume ratio of 30:70, in an amount of 3 wt% based on a total weight of the electrolyte and adding $LiPF_6$ as a lithium salt to a concentration of 1M.

**<Example 2>**

**<Preparation of Secondary Battery>**

A lithium secondary battery was prepared in the same manner as in Example 1, except that the negative electrode slurry was prepared by adding a carbon-based active material (artificial graphite (D50: 18 $\mu$m): natural graphite (D50: 18 $\mu$m): SiOx (D50: 7 $\mu$m) = 49.5:49.5:1), carbon black, SBR as a binder, and CMC as a thickener to distilled water as a solvent for forming a negative electrode slurry at a weight ratio of 95.7:1:2.3:1.

**<Example 3>**

**<Preparation of Secondary Battery>**

A lithium secondary battery was prepared in the same manner as in Example 1, except that the negative electrode slurry was prepared by adding a carbon-based active material (artificial graphite (D50: 18 $\mu$m): natural graphite (D50: 18 $\mu$m): SiOx (D50: 7 $\mu$m) = 48.75:48.75:2.5), carbon black, SBR as a binder, and CMC as a thickener to distilled water as a solvent for forming a negative electrode slurry at a weight ratio of 95.7:1:2.3:1.

**<Example 4>**

**<Preparation of Secondary Battery>**

A lithium secondary battery was prepared in the same manner as in Example 1, except that the negative electrode slurry was prepared by adding a carbon-based active material (artificial graphite (D50: 18 $\mu$m): natural graphite (D50: 18 $\mu$m): SiOx (D50: 7 $\mu$m) = 48:48:4), carbon black, SBR as a binder, and CMC as a thickener to distilled water as a solvent for forming a negative electrode slurry at a weight ratio of 95.7:1:2.3:1.

**<Comparative Example 1>**

EP 4 645 498 A1

**<Preparation of Secondary Battery>**

A lithium secondary battery was prepared in the same manner as in Example 1, except that the negative electrode slurry was prepared by adding a carbon-based active material (artificial graphite (D50: 18 $\mu$m): natural graphite (D50: 18 $\mu$m): SiOx (D50: 7 $\mu$m) = 47.25:47.25:5.5), carbon black, SBR as a binder, and CMC as a thickener to distilled water as a solvent for forming a negative electrode slurry at a weight ratio of 95.7:1:2.3:1.

In the Examples and Comparative Example, the negative electrode and the positive electrode were controlled based on the information shown in Table 1 below.

[Table 1]

| | Positive electrode active material | Negative electrode active material | Positive electrode discharge loading (mAh/cm$^2$) | Negative electrode discharge loading (mAh/cm$^2$) | Negative electrode cut-off potential (V) | Cell driving voltage (V) | Negative electrode discharge potential control (V) |
|---|---|---|---|---|---|---|---|
| Example 1 | LiNi$_{0.6}$Co$_{0.2}$Mn$_{0.2}$O$_2$ | Graphite | 3.119 | 4.43 | 0.24 | 4.35V-2V | 0-1.5 (vs Li/Li+) |
| Example 2 | LiNi$_{0.6}$Co$_{0.2}$Mn$_{0.2}$O$_2$ | Graphite + SiO 1% | 3.119 | 4.43 | 0.39 | 4.35V-2V | 0-1.5 (vs Li/Li+) |
| Example 3 | LiNi$_{0.6}$Co$_{0.2}$Mn$_{0.2}$O$_2$ | Graphite + SiO 2.5% | 3.119 | 4.43 | 0.55 | 4.35V-2V | 0-1.5 (vs Li/Li+) |
| Example 4 | LiNi$_{0.6}$Co$_{0.2}$Mn$_{0.2}$O$_2$ | Graphite + SiO 4% | 3.119 | 4.43 | 0.70 | 4.35V-2V | 0-1.5 (vs Li/Li+) |
| Comparative | LiNi$_{0.6}$Co$_{0.2}$Mn$_{0.2}$O$_2$ | Graphite | 3.119 | 4.43 | 0.86 | 4.35V- | 0-1.5 |

13

| Example 1 | | + SiO 5.5% | | | | 2V | (vs Li/Li+) |
|---|---|---|---|---|---|---|---|

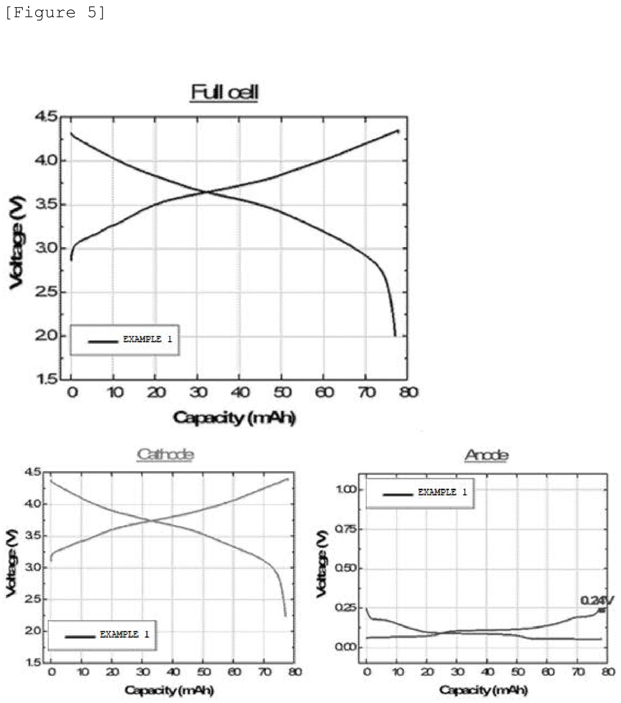

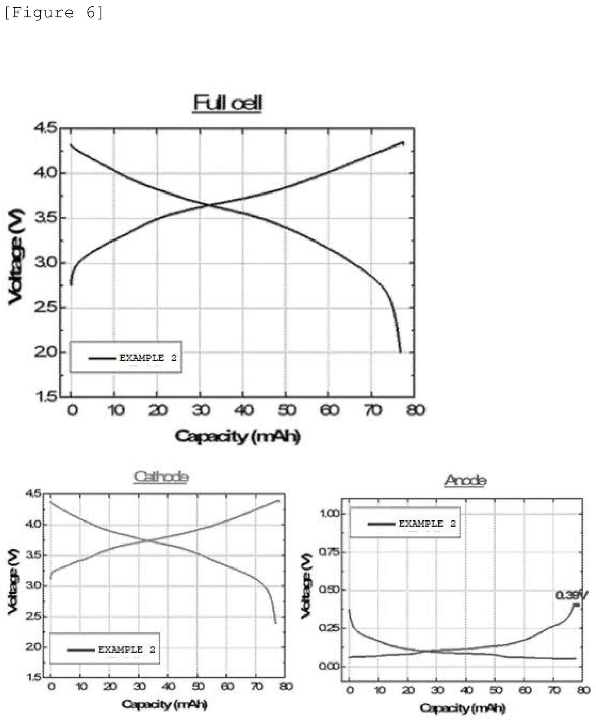

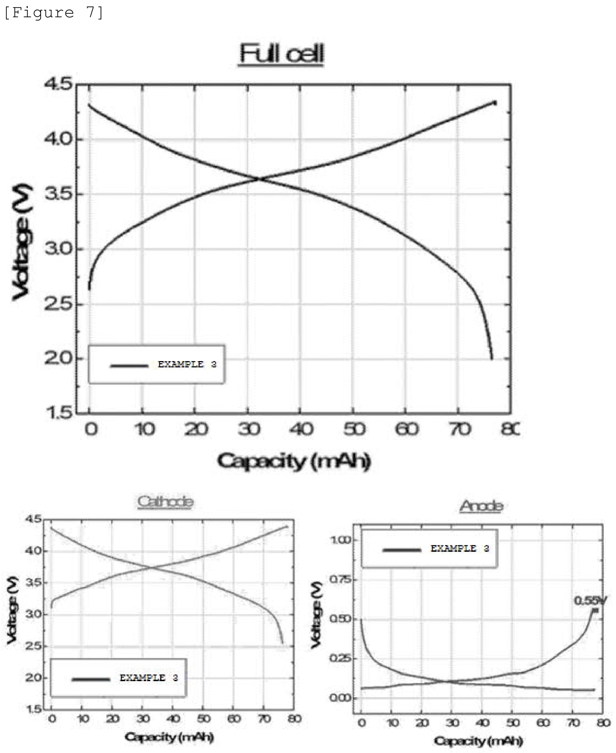

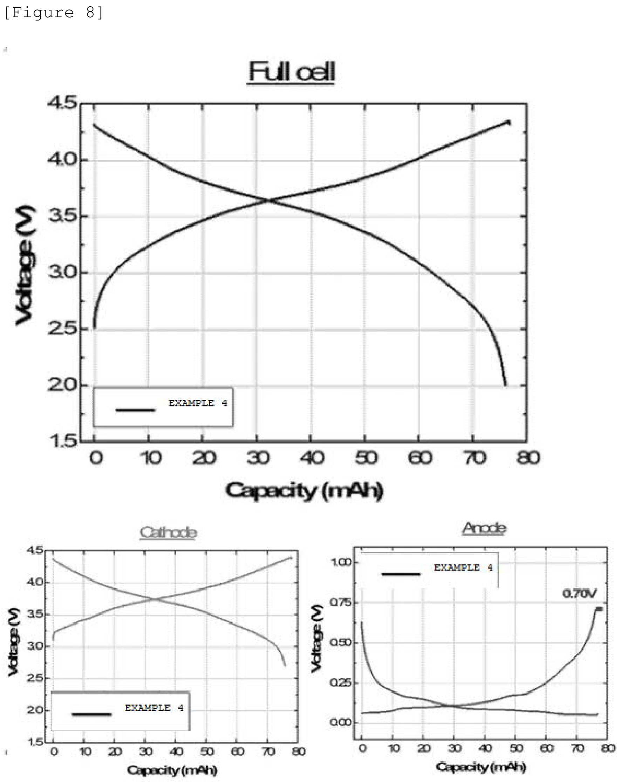

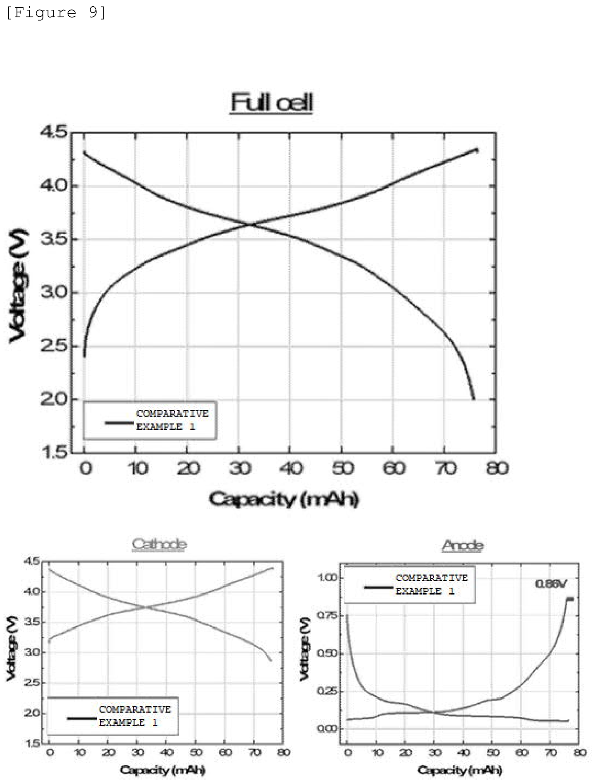

Specifically, as shown in FIGS. 5 to 9, a bi-cell three-electrode evaluation was conducted to confirm the cut-off potential of Table 1, and the results were derived as shown in Table 1.

## Experimental Examples

For the Examples and Comparative Example, the results as shown in Table 2 were obtained.

In this case, in Table 2, the 0.33C capacity retention rate was evaluated using an electrochemical charging and discharging device at high temperature of 45°C. The in-situ cycle test was conducted on the secondary battery at 1 C/0.5 C in accordance with the cell driving voltage listed in Table 1, and the capacity retention rate was calculated as follows, based on 300 cycles.

capacity retention rate (%) = {(discharge capacity in the $N^{th}$ cycle)/(discharge capacity in the first cycle)} $\times$ 100

[Table 2]

| | Initial 0.33C capacity (mAh) | Residual negative electrode capacity (Formula 1) (%) | Residual negative electrode capacity (mAh/cm$^2$) | 0.33C capacity retention rate (%, 300th) |
|---|---|---|---|---|
| Example 1 | 38.7 | 10.4 | 0.46 | 86 |
| Example 2 | 38.1 | 5 | 0.22 | 83 |
| Example 3 | 37.7 | 4.1 | 0.18 | 82 |
| Example 4 | 38.1 | 3 | 0.13 | 80 |
| Comparative Example 1 | 37.5 | 2.4 | 0.10 | 78 |

As can be seen from Table 2 above, for all of Examples 1 to 4 of the present invention, it was confirmed that, when the negative electrode cut-off potential was controlled to leave the residual negative electrode capacity to be within the range of Formula 1, the life characteristics were also improved. That is, the life characteristics were improved by controlling the cut-off potential without being significantly affected by the type of negative electrode, and it was confirmed that designing the battery to include the residual negative electrode capacity, as defined by Formula 1, is important. Specifically, Example 1 corresponds to a carbon-based negative electrode, and Examples 2 to 4 correspond to carbon-based and silicon-based mixed negative electrodes.

In Comparative Example 1, the cut-off potential was controlled, but the residual negative electrode capacity remained at 2.4%. In this case, it was confirmed that the initial capacity was also reduced to some extent, and the capacity retention rate was not maintained at 80% or higher, i.e., the life characteristics were reduced.

## Claims

1.  A lithium secondary battery comprising:

a positive electrode;
a negative electrode;
a separator interposed between the positive electrode and the negative electrode; and
an electrolyte, wherein
the negative electrode has a discharge potential controlled to be 0 V or higher and 1.5 V or lower (vs Li/Li+),
the negative electrode has a residual negative electrode capacity of 2.5% or greater as defined by Formula 1, and
the negative electrode has a cut-off potential lower than the discharge potential.

[Formula 1]

$$\frac{\substack{\text{(negative electrode discharge capacity (vs Li/Li+) within range of 0 V or higher and 1.5 V or lower} \\ -\text{ negative electrode discharge capacity (vs Li/Li+) within range of 0V or higher and cut-off potential or lower)}}}{\text{negative electrode discharge capacity (vs Li/Li+) within range of 0 V or higher and 1.5 V or lower}} \times 100 \ (\%)$$

2. The lithium secondary battery of claim 1, wherein the residual negative electrode capacity of the negative electrode represented by Formula 1 above is 2.50 or greater and 50% or less.

3. The lithium secondary battery of claim 1, wherein

   a value of (negative electrode discharge capacity (vs Li/Li+) within a range of 0 V or higher and 1.5 V or lower - negative electrode discharge capacity (vs Li/Li+) within a range of 0 V or higher and cut-off potential or lower) of Formula 1 above is 1 $\mu$Ah/cm$^2$ or greater, and
   the cut-off potential of the negative electrode is 0 V or higher and 1.4 V or lower.

4. The lithium secondary battery of claim 1, wherein

   the negative electrode comprises a negative electrode current collector layer and a negative electrode active material layer provided on one surface or both surfaces of the negative electrode current collector layer,
   the negative electrode active material layer comprises a negative electrode active material layer composition,
   the negative electrode active material layer composition comprises a negative electrode active material, a negative electrode conductive material, and a negative electrode binder, and
   the negative electrode active material comprises one or more selected from the group consisting of a carbon-based active material, a silicon-based active material, a tin-based active material, a metal-based active material capable of alloying with lithium, a lithium titanium oxide, and a lithium-containing nitride.

5. The lithium secondary battery of claim 4, wherein

   the negative electrode active material comprises a carbon-based active material, and
   the cut-off potential of the negative electrode is 0.1 V or higher and 0.9 V or lower.

6. The lithium secondary battery of claim 4, wherein

   the negative electrode active material comprises a silicon-based active material, and
   the cut-off potential of the negative electrode is 0.1 V or higher and 1.4 V or lower.

7. The lithium secondary battery of claim 4, wherein

   the negative electrode active material comprises a silicon-based active material and a carbon-based active material, and
   the cut-off potential of the negative electrode is 0.2 V or higher and 1.3 V or lower.

8. The lithium secondary battery of claim 4, wherein

   the negative electrode active material comprises a carbon-based active material and a silicon-based active material, and
   the silicon-based negative electrode active material is included in an amount of 30 parts by weight or less based on 100 parts by weight of the negative electrode active material.

9. The lithium secondary battery of claim 4, wherein the negative electrode active material is included in an amount of 60 parts by weight or more based on 100 parts by weight of the negative electrode active material layer composition.

10. The lithium secondary battery of claim 1, wherein

    the positive electrode comprises a positive electrode current collector layer and a positive electrode active material layer comprising a positive electrode active material layer composition and provided on one surface or both surfaces of the positive electrode current collector layer,

the positive electrode active material layer comprises a positive electrode active material, a positive electrode conductive material, and a positive electrode binder, and

the positive electrode active material comprises one or more selected from the group consisting of $LiNi_xCo_yMn_zO_2$ (x+y+z=1) ; $LiNi_aCo_bMn_cAl_dO_2$ (a+b+c+d=1) ; $LiMn_2O_4$; $LiNi_{0.5}Mn_{1.5}O_2$; and $LiM_xFe_yPO_4$ (M: transition metal, x+y=1).

11. The lithium secondary battery of claim 4, wherein

a thickness of the negative electrode current collector layer is 1 $\mu$m or greater and 100 $\mu$m or less, and

a thickness of the negative electrode active material layer is 5 $\mu$m or greater and 500 $\mu$m or less.

12. The lithium secondary battery of claim 10, wherein

a thickness of the positive electrode current collector layer is 1 $\mu$m or greater and 100 $\mu$m or less, and

a thickness of the positive electrode active material layer is 5 $\mu$m or greater and 500 $\mu$m or less.

[Figure 1]

[Figure 2]

| CUT-OFF POTENTIAL (V) OF NEGATIVE ELECTRODE | RESIDUAL NEGATIVE ELECTRODE CAPACITY (FORMULA 1, %) |
|---|---|
| 0.1 | 92 |
| 0.15 | 48 |
| 0.2 | 19 |
| 0.3 | 6 |
| 0.4 | 4 |
| 0.5 | 2.5 |
| 0.6 | 1.6 |
| 0.7 | 1 |
| 0.8 | 0.8 |
| 0.9 | 0.5 |

[Figure 3]

| CUT-OFF POTENTIAL (V) OF NEGATIVE ELECTRODE | RESIDUAL NEGATIVE ELECTRODE CAPACITY (FORMULA 1, %) |
|---|---|
| 0.1 | 98 |
| 0.2 | 92 |
| 0.3 | 74 |
| 0.4 | 52 |
| 0.5 | 36 |
| 0.6 | 23 |
| 0.7 | 16 |
| 0.8 | 12 |
| 0.9 | 10 |
| 1.0 | 7.4 |
| 1.1 | 5.5 |
| 1.2 | 4.1 |
| 1.3 | 2.7 |
| 1.4 | 1.3 |

[Figure 4]

| CUT-OFF POTENTIAL (V) OF NEGATIVE ELECTRODE | RESIDUAL NEGATIVE ELECTRODE CAPACITY (FORMULA 1, %) |
|---|---|
| 0.1 | 98 |
| 0.2 | 63 |
| 0.3 | 26 |
| 0.4 | 14 |
| 0.5 | 8 |
| 0.6 | 5.5 |
| 0.7 | 3 |
| 0.8 | 2 |
| 0.9 | 0.7 |
| 1.0 | 0.4 |
| 1.1 | 0.3 |
| 1.2 | 0.1 |
| 1.3 | 0.05 |
| 1.4 | 0.01 |

[Figure 5]

[Figure 6]

[Figure 7]

[Figure 8]

Full cell

Cathode

Anode

[Figure 9]

Full cell

Cathode

Anode

## INTERNATIONAL SEARCH REPORT

| International application No. |
|---|
| **PCT/KR2024/018614** |

| | |
|---|---|
| **A. CLASSIFICATION OF SUBJECT MATTER** | |

**H01M 10/0525**(2010.01)i; **H01M 4/583**(2010.01)i; **H01M 4/48**(2010.01)i; **H01M 4/36**(2006.01)i; **H01M 4/525**(2010.01)i; **H01M 4/505**(2010.01)i

According to International Patent Classification (IPC) or to both national classification and IPC

**B. FIELDS SEARCHED**

Minimum documentation searched (classification system followed by classification symbols)

H01M 10/0525(2010.01); G01R 31/36(2006.01); H01M 10/052(2010.01); H01M 10/42(2006.01); H01M 4/139(2010.01); H01M 4/38(2006.01); H01M 4/62(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 리튬 이차전지 (lithium secondary battery), 음극 (anode), 방전 전위 (discharge potential), 컷-오프 전위 (cut-off potential), 잔여 용량 (remaining capacity), 실리콘계 음극 (silicon-based anode)

**C. DOCUMENTS CONSIDERED TO BE RELEVANT**

| Category* | Citation of document, with indication, where appropriate, of the relevant passages | Relevant to claim No. |
|---|---|---|
| A | KR 10-2018-0033899 A (LG CHEM, LTD.) 04 April 2018 (2018-04-04)<br>See claims 1-3; and paragraphs [0041], [0054] and [0112]. | 1-12 |
| A | KR 10-2017-0036556 A (SAMSUNG ELECTRONICS CO., LTD.) 03 April 2017 (2017-04-03)<br>See claim 1; and paragraphs [0054], [0067]-[0070] and [0106]. | 1-12 |
| A | JP 2013-222530 A (IDEMITSU KOSAN CO., LTD.) 28 October 2013 (2013-10-28)<br>See abstract; and claims 1-6. | 1-12 |
| A | KR 10-2020-0095713 A (LG CHEM, LTD.) 11 August 2020 (2020-08-11)<br>See abstract; and claims 1-10. | 1-12 |
| A | KR 10-2019-0044450 A (LG CHEM, LTD.) 30 April 2019 (2019-04-30)<br>See abstract; and claims 1-10. | 1-12 |

| ☐ Further documents are listed in the continuation of Box C. | ☑ See patent family annex. |
|---|---|

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **05 March 2025** | **05 March 2025** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2024/018614**

| Patent document cited in search report | | | Publication date (day/month/year) | Patent family member(s) | | | Publication date (day/month/year) |
|---|---|---|---|---|---|---|---|
| KR | 10-2018-0033899 | A | 04 April 2018 | KR | 10-2255524 | B1 | 25 May 2021 |
| KR | 10-2017-0036556 | A | 03 April 2017 | KR | 10-1997746 | B1 | 08 July 2019 |
| | | | | US | 2017-0093179 | A1 | 30 March 2017 |
| | | | | US | 9966782 | B2 | 08 May 2018 |
| JP | 2013-222530 | A | 28 October 2013 | | None | | |
| KR | 10-2020-0095713 | A | 11 August 2020 | CN | 113272996 | A | 17 August 2021 |
| | | | | CN | 113272996 | B | 13 September 2024 |
| | | | | EP | 3863086 | A1 | 11 August 2021 |
| | | | | EP | 3863086 | A4 | 08 December 2021 |
| | | | | KR | 10-2542291 | B1 | 14 June 2023 |
| | | | | US | 12021217 | B2 | 25 June 2024 |
| | | | | US | 2022-0006065 | A1 | 06 January 2022 |
| | | | | WO | 2020-159263 | A1 | 06 August 2020 |
| KR | 10-2019-0044450 | A | 30 April 2019 | CN | 111247672 | A | 05 June 2020 |
| | | | | CN | 111247672 | B | 05 May 2023 |
| | | | | EP | 3683867 | A1 | 22 July 2020 |
| | | | | EP | 3683867 | A4 | 11 November 2020 |
| | | | | EP | 3683867 | B1 | 17 April 2024 |
| | | | | ES | 2985080 | T3 | 04 November 2024 |
| | | | | HU | E066364 | T2 | 28 July 2024 |
| | | | | PL | 3683867 | T3 | 01 July 2024 |
| | | | | US | 11545660 | B2 | 03 January 2023 |
| | | | | US | 2020-0251728 | A1 | 06 August 2020 |
| | | | | WO | 2019-078691 | A1 | 25 April 2019 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020230164404
- JP 2009080971 A